# EUROPEAN PATENT APPLICATION

(11) **EP 1 814 048 A2**
(43) Date of publication of application: **01.08.2007**
(21) Application number: 07101178.7
(22) Date of filing: 25.01.2007
(51) Int. Cl.: G06F 17/30

(54) **Content analytics of unstructured documents**

(30) Priority: 27.01.2006 US 341988
(71) Applicant: SAP AG, 69190 Walldorf (DE)
(72) Inventor: Hutzel, Daniel, 76149, Karlsruhe (DE); Maier, Dietmar, 69126, Heidelberg (DE)
(74) Representative: Richardt, Markus Albert

(57) **Abstract**

A method and system of content analytics wherein users can populate a database with documents or assets that have corresponding profiles containing metadata. Documents can later be retrieved during a database search. A content analysis view can display information, consisting of calculations of the documents' metadata based on a metric chosen by the user.

## Description

### Background of the Invention

With the growing number of documents existing on the internet and intranets, the need for a method of organizing and searching the vast quantities of information is necessary. Users frequently look for documents based on search terms and boolean operators using various search techniques, such as search engines.

US patent application 20040049505 shows a system that allows OLAP analysis of unstructured content. This is accomplished by transforming isolated, unstructured content into quantifiable structured data, thereby creating a common measure for performing OLAP analysis. This allows the integration of unstructured content with structured data sources.

However, existing content search mechanisms do not provide users with insight about actual content sources, dependencies, context or other relationships of potentially relevant documents or content modules. In existing content search mechanisms, it is not possible to pre-select the most suitable document / content module from a list of candidates by applying and comparing various criteria. Instead, a user searching for information has to retrieve and review several documents before he is able to decide which document is actually the most appropriate for his purpose.

Most relations between documents are not stored. If the relations do exist, they are typically hidden from the user or in a format that is not readily accessible or capable of being understood by a user (i.e. for the internal use of a search algorithm). A method and system is therefore needed to quantify the value of information and determine dependencies between documents that are easily viewed and understood by a user searching for documents. However, in the process of standardizing complex material lists of comprehensive sets of documents and content across documents, there is no easy way to create transparency about existing dependencies of content across documents, nor how these dependencies could be optimized. A method and system is also needed to take the calculated values and criteria and display this complex set of dependencies to a user.

The present invention therefore aims to provide a data processing system, method and computer program product that mitigates the above described disadvantages of the prior art.

### Summary

The present invention provides a data processing system, method and computer program product as claimed in the independent claims. Preferred embodiments are given in the dependent claims.

Embodiments of the present invention are particularly advantageous as both efficient retrieval of existing documents and authoring of new documents is facilitated using OLAP type processing and interface techniques. In particular, an interface is provided that contains a content matrix from which the user can select relevant documents for reusing document content. The content matrix is generated by means of an OLAP cube which minimizes latency times experienced by the user when the user changes the selection of dimensions for the generation of the content matrix.

### Brief Description of the Drawings

In the following embodiments of the invention are described in greater detail by way of example only making reference to the drawings in which

FIG. 1 depicts a data processing system capable of using content analytics.

FIG. 2 depicts an overview of a content analytics system.

FIGs. 3a to 3c depict three example templates that may be used in a content analytics system.

FIGs. 4a to 4g depict various example displays of a content matrix utilizing content analytics and corresponding metadata to create values corresponding to various assets. This information may be presented to a user. Corresponding keys are also displayed to a user to explain the color/value scheme utilized in the content matrix.

FIG. 5 depicts a graphical display of asset relations found in a content analytics system.

FIG. 6 depicts the logic that would be performed by a content analytic system.

FIG. 7 shows a block diagram of an embodiment of a data processing system of the invention.

FIG. 8 shows a schematic view of a user interface.

FIG. 9 shows a flowchart of an embodiment of a method of the invention.

### Detailed Description

Content, meaning any type of meaningful content (i.e., a benefit statement, a customer pain point, etc.), are continuously used to populate repositories in intranets or over the world-wide web. This content is found in assets, for example, documents, videos, images, or any other type of file that can hold content. In intranets in particular, assets are typically related, meaning that there are content dependencies. The assets are typically text documents, but they can also be graphical or audio/visual; thus, documents and assets are referred to interchangeably.

Content dependencies can be a useful attribute of a document to quantify because users, when searching for content, typically collect information that are related to each other. Furthermore, in creating new documents, information is derived from other related documents. For example, an engineer may create a document discussing the technical specification of a product, for example an automobile. However, this technical information may be usable and integrated into marketing documents that describe advertising aspects of the automobile. The same technical information may also be used by a sales team to create a document analyzing the geographic and demographic target customers for the automobile. A manufacturing team may create another document, using the same technical specification, to determine a budget and profit margins based on the design. Each of these downstream documents, e.g. documents that are derivative of information contained in an original or source document, would have dependencies with the parent document, e.g. the document from which a document is directly derived from. Documents may have various dependencies. For example, the manufacturing team may use both a technical specification as well as a document on estimated sales created by the sales team to create its document regarding budget.

In particularly large organizations, content is typically distributed in a standard format. Information from these documents is reused and amended in various forms in other assets. Often, organizations will have templates for documents that are frequently disseminated as official documents. Other assets can also be added to an intranet database as needed. Content analytics uses the fact that document templates and assets are related. Users are therefore able to retrieve information faster and also find documents that are most up-to-date. By using a content analysis view (e.g. a content matrix, graphical display, etc.), a view display that shows values, attributes, or dependencies referring to content as represented by metadata (or analysis done thereof), users can determine not only the types of assets that have the content they are searching for, but also the types of content that have not yet been populated in a particular database.

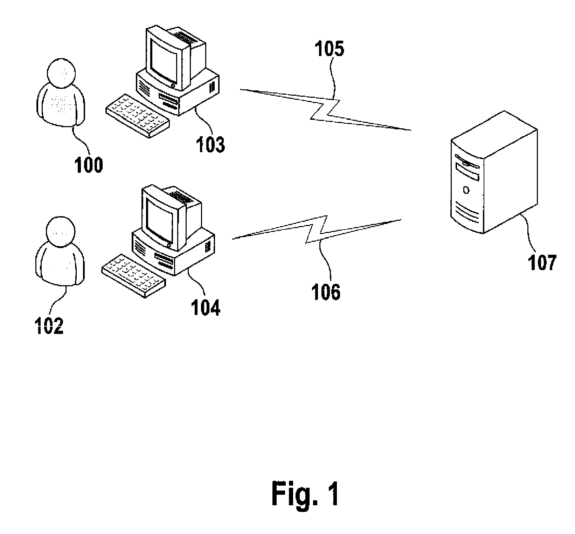

Figure 1 depicts a system that may use a content analytics system. A plurality of users 100 and 102 (represented by two users for convenience) can access terminals 103 and 104 (represented by two computers for convenience) over various communication mediums 105 and 106 to connect to a plurality of servers (represented by a single server for convenience). The terminals 103 and 104 are computing devices that have input, for example, computers, handheld devices, etc. The communication medium 105 and 106 may be an ethernet connection to an intranet or internet, a wireless connection, USB, firewire, etc. An embodiment of a content analytics system may reside on a single server 107 which houses a database. However, as is frequently done, databases may be distributed over several servers 107 or on terminals 103 and 104. Similarly, one can distribute the functional modules of an embodiment across one or more server computers 107 as appropriate.

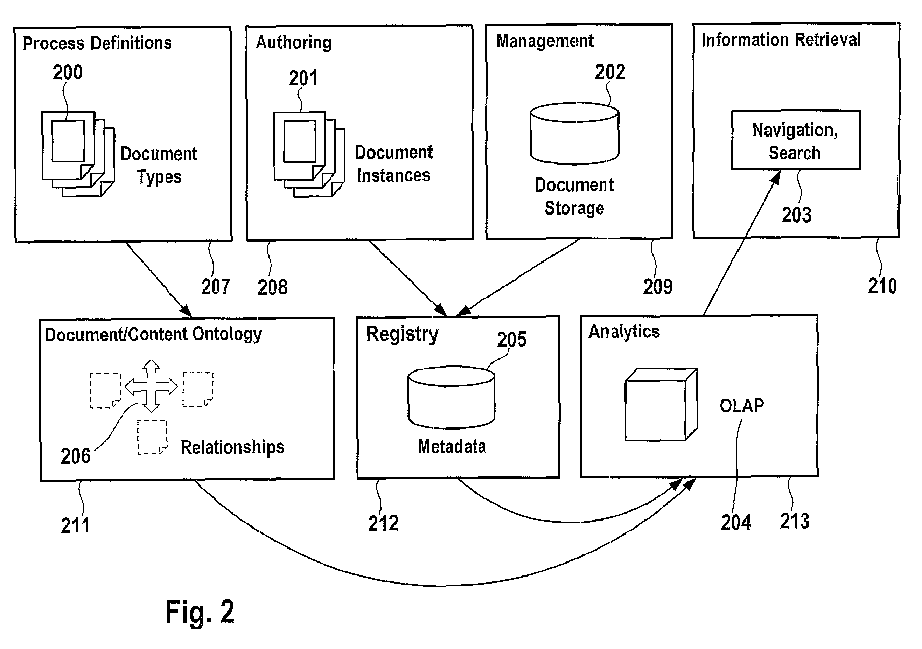

Figure 2 depicts an overview of an embodiment using a content analytics system. A content analytics system may obtain types of document types along with corresponding templates from "Process Definitions" 207 describing the workflows in an organization, meaning there are templates or forms representing various asset or document types 200. The document types 200 are typically pre-defined thereby providing a standard such that the content analytics system may more accurately quantify the value of the information as well as the relationships 206. As will be explained later, a content analytics system can be adaptable to accept non-pre-defined assets as well. A standardized "Table of Contents" (e.g. list of headings) in the templates may contain a listing of all the known content elements in a database.

There may be times when a user 103 will author asset or document types 200 that are not of a pre-defined format. For example, during the "Authoring" phase 208, a user 103 may submit an asset or document instance 201 as is and let the system determine ad hoc the value and relations of that document.

Alternatively, a user 103 may create an asset or document type 200 first, so that the content analytics system has a new document type established in the system. The user would then author a document using the template he created. Having a pre-defined document allows the content analytics system to later readily determine relationships 206, an important aspect in creating a "Document/Content Ontology" 211. An ontology, as used in knowledge management systems, is the hierarchical structuring of knowledge by subcategorizing information according to its essential quantitative values.

In another example, a user may create a document and an embodiment of the invention may use various natural language parsing techniques to determine context and relationships 206 to give values to the document. Thus, an embodiment would be able to integrate both pre-defined and non-pre-defined document types into a content analytics system.

During the "authoring" phase 208, a plurality of document instances 201 are created by a plurality of users 103 and 104. These documents are stored in document storage 202, typically a server or database. In the "Management" phase 209 the document that was created is assigned metadata 205 (e.g. values or attributes) which are stored as part of a "Registry" along with a reference to the document's location in the document storage. Metadata is "data about data" or data about information or data found in the documents. This metadata may be general attributes about the data, such as file type, author, history of edits, etc. Metadata may also be calculated values, such as quantity of words, number of pages, amount of reuse of content, etc. Metadata may also be other data values specified by specific systems or by the user. These values or metadata will later be used to return the best search results during the "Information Retrieval" stage 203. Some of the data may be displayed to a user in a content analysis view and other data may be used to help create the content analysis view. The "authoring" phase 208 also encompasses updates of document instances 201 that already exist in document storage 202. During the update of source document instances 201, an embodiment of the content analytics system may dynamically calculate the impact of these changes as they relate to dependent documents and bring that to the attention of the authors of these dependent documents.

During the "Information Retrieval" stage 210, a user 103 or 104 would gain access to content assets by using a navigational or a search approach or a combination of both. 203. In the navigational approach, a content analysis view is displayed to the user in order to illustrate the relationships and other dimensions to navigate along. In a search approach, the system may use the metadata that is otherwise used by the content analysis view, to calculate in the background without the knowledge of the user an order of relevance, to deliver the most relevant content assets to the top of in a search result list. An embodiment of the content analytics system may utilize the relationships 206 of the Document Ontology 211 and the Metadata 205 of the Registry 212, and through OLAP 204 (Online Analytical Processing) an embodiment may provide a user 103 or 104 with a content analysis view created ad hoc.

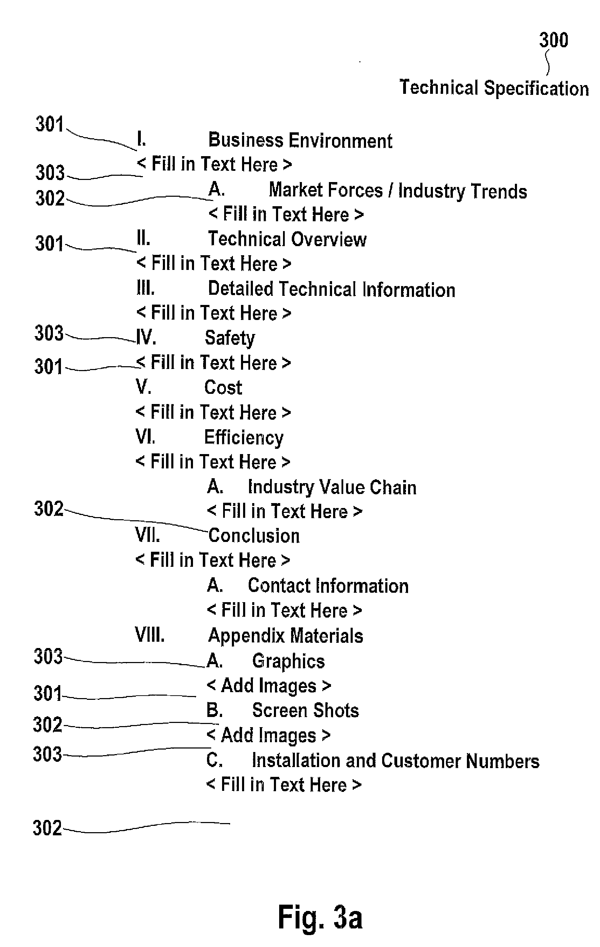

Figures 3a to 3b provide example document templates that may be used with an embodiment of the content analytics system. The example that will be used throughout this application is a search for automobile data within an automobile manufacturing company. Within this example automobile company, all assets are contained within an example embodiment of a content analytics system. Figures 3a to 3b are document templates that contain a "Table of Contents" or listing of headings which consist of major headings 301 and sub-headings 302 represented by Roman numerals and capital letters, respectively. These headings, sub-headings, sub-sub-headings, etc. will later be content elements in a content matrix. In other embodiments, templates may be represented in any form using other schemes, such as lowercase letters, numbers, bullet points, etc., to represent the various headings that will later be content elements in a content matrix.

In Figure 3a, there are several topics that are major headings 301, such as "Business Environment," "Technical Overview," or "Safety." Sub-headings 302 are under the major headings 301, for example, the sub-heading 301 "Market Forces / Industry Trends" is placed under the major heading 301 "Business Environment." Under the major headings 301 and sub-headings 302 are indicators to an author of the type of content to be placed in the particular section. For example, under the "Business Environment" major heading 301 there is an indicator 303 for "text," whereas under the "Graphs and Charts" sub-heading 302 there is an indicator 303 for "images." The top of the document type will also have the name of the document type 300, in this case the document is a "Technical Specification."

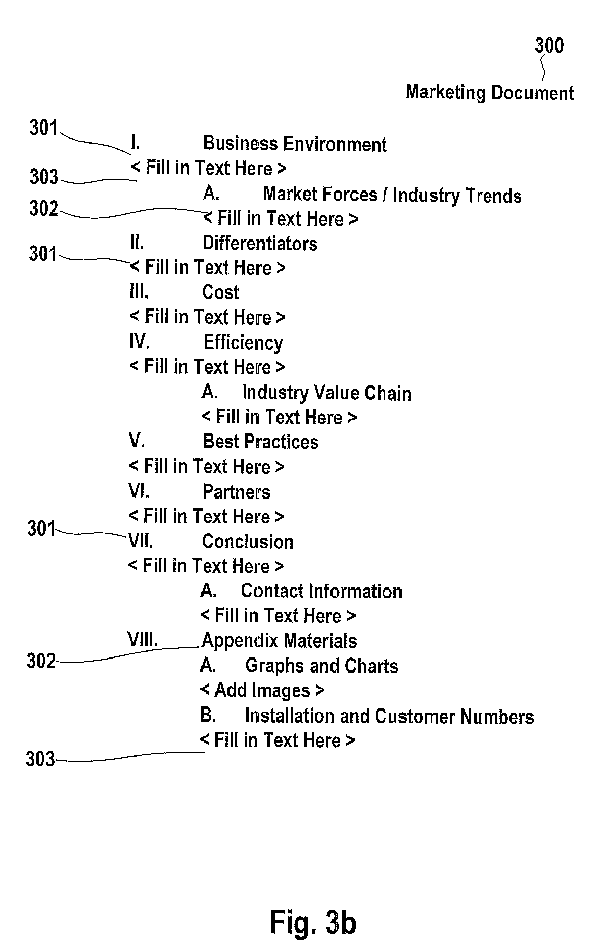

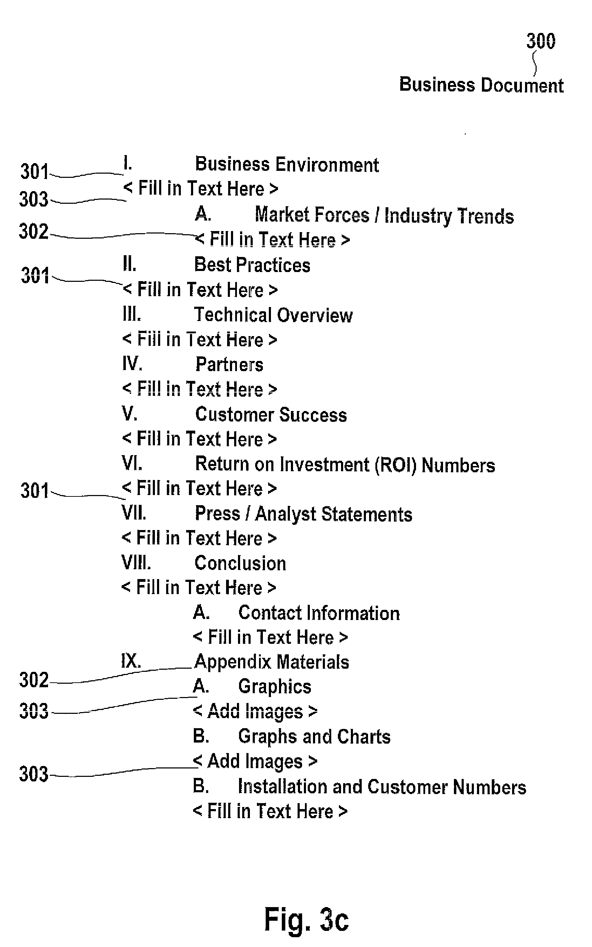

Figure 3b is another document template, and as shown by the document type 300, it is a "Marketing Document." Once again there are various major headings 301, sub-headings 302, and indicators 303. Figure 3c is another document, of the "Business Document" document type 300, and also contains similar major headings 301 and sub-headings 302 as that of Figures 3a and 3b. These similar headings 301 and sub-headings 302, likely containing similar content, which will later be used to show relations between the documents. Each of major headings 301 is assigned to an dimension of an OLAP cube; by selecting various degrees of sub-headings that user can select a more or less aggregated view of the OLAP cube.

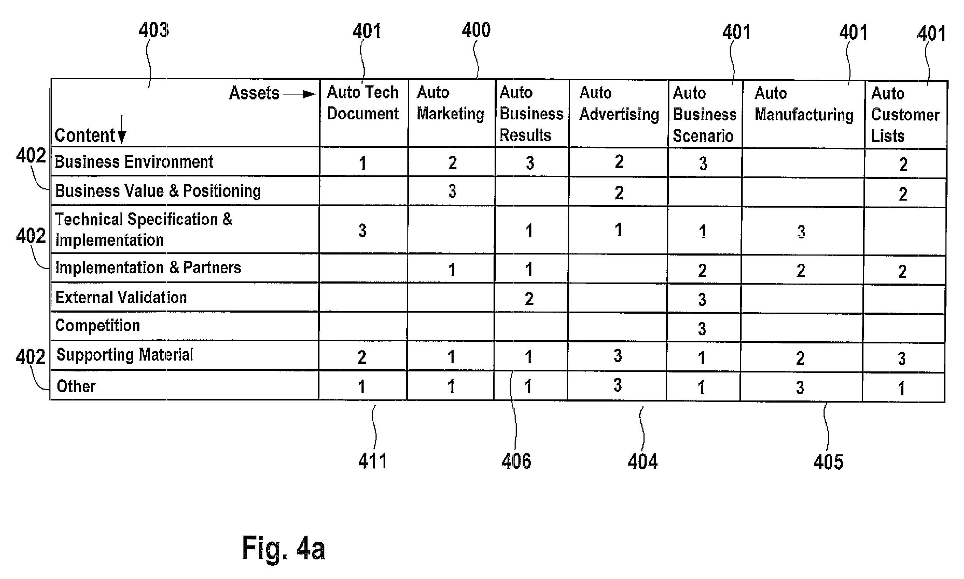

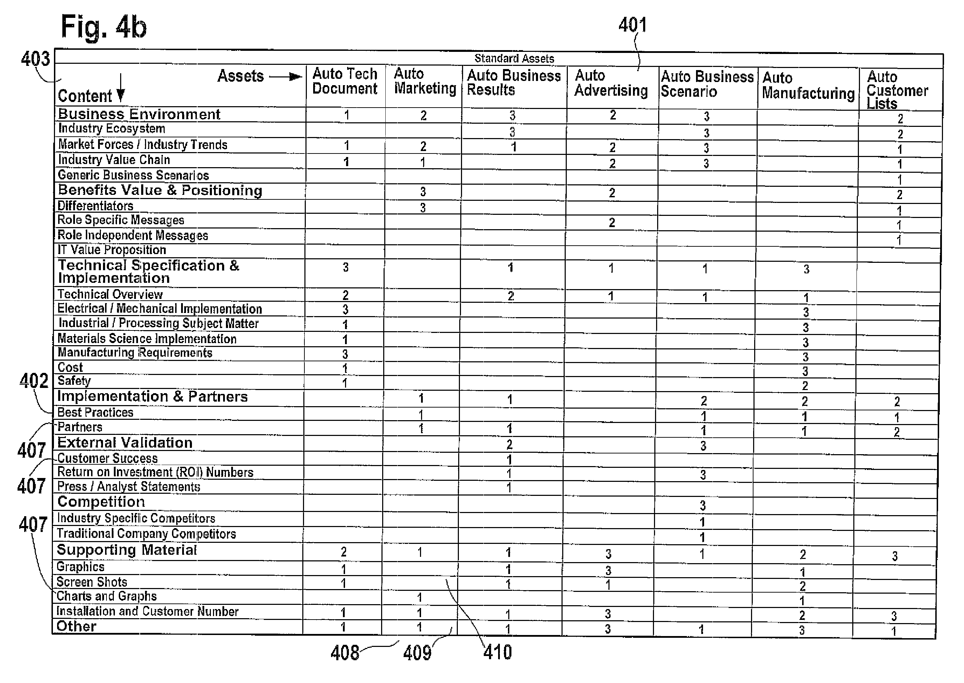

Figures 4a and 4b depict a content matrix, one example of a type of content analysis view, that has been retrieved by a user 103 or 104 in a search regarding an example automobile model. At the top of the content matrix is the title 400 providing a general description of the types of documents that have been returned. In this instance, "Standard Assets" populate the content matrix. An asset would be any content that would be returned by a search, such as a document. An embodiment of the present invention may divide document types further into multiple categories of documents. For example, a newly created document may by default be a "standard asset"; however, the Document Ontology of the embodiment may also have separate categories, such as "external documents" where all the assets would be documents provide by vendors or customers of the company. Having this separate category of document types provides a further breakdown of document types and provides more metadata to help a user later narrow his search of documents or assets.

In Figure 4a, the assets 401 are listed horizontally and the major content elements 402 are listed vertically, as indicated by Menu Header 403. This is one example content matrix display and other embodiments may represent assets 401 and content elements in different arrangements. This original listing of major content elements 402 is expandable by the user in order to view sub-content elements. The various assets 401 have values, and a corresponding color, assigned to each of the cells corresponding to content elements (hereinafter cells corresponding to a document and a content element will be referred to as cells or content elements, as understood by context). For example, in cell 411, the value is "1" and there is a light shade of color associated. The content matrix created displays a number "1" based on the types of metadata value that is requested and the metric used to evaluate the asset. In this instance, the numbers represent the amount of content in that content element 402 found in that particular asset 401. In this particular definition of values, the lower the number the less quantity of information that is available for that asset corresponding to a specific content element. Similarly, the lighter the color the less content that is found. For example, in cell 405, there is a number "2" and a darker shade of color than that associated with "1." This means cells with a "2" have more content than those cells that contain a "1." In cell 404, there is a number "3" and an even darker shade of color than that associated with "2." Cell 406 is an example cell where either an insignificant amount of content or no content is available. Using increasing values in numbers and increasing shades of colors, an embodiment may represent increasing quantity or level of content of particular content elements of a document.

An advantage of using different colors/number values to quantify the content of documents is that users are not only able to determine the level of content within each asset, but also to compare assets against each other. For example, a user looking at the "Auto Advertising" document and see that cell 404 indicates that in the "Other" major content element it has the value "3". A user would be able to compare this to the "Auto Tech Document", which has a value of "1" 411 for the corresponding "Other" major content element. A user could then determine that the "Auto Advertising" asset has more content for the "Other" major content element than the "Auto Tech Document" asset. Thus, an advantage of an embodiment of the invention is not only to evaluate the content within a document, but also compared to other documents.

Figure 4b is an expanded view of Figure 4a, where all the major content elements 402 have corresponding sub-content elements 407 listed under their corresponding major content elements 402. A Menu Header 403 lists that the assets 401 are horizontal while the content is listed vertically. If the values in the cells of the content matrix are evaluated solely on quantity of information, the major content elements 402 may be determined from simply adding up the values of the sub-content elements. However, if the cells of an embodiment contain values that correspond to quality or relevance of content, then it is possible that major content elements 402 may have values that are equal to or even lower than the values in its corresponding sub-content elements 407. For example, in Figure 4b the cell of sub-content element "Installation and Customer Numbers" of the "Auto Marketing" document 408 has the value "1". The cell of sub-content element "Charts and Graphs" of the "Auto Marketing" document 409 also has the value "1". Additively, in a purely quantity-based metric, the cell of major content element "Supporting Material" of the "Auto Marketing" document 410 would contain the value "2". This determination may be based on a calculation made by an embodiment of the content matrix.

However, content matrices can also have many different types of views depending on the needs of a user. In the case of a content matrix, a view is a display of certain types of metadata depending on the metric used to populate values in the cells. For example, a view of the content matrix may be values using metric of quantity of content. Another view of the content matrix may be values using the metric of quality of the content. Users can use different views to gather data about the assets, and also compare and sort the information found in the different views. Thus, in an alternative view of the content matrix, e.g. a quality and relevance-based metric, as is shown in Figure 4b, the value of the major content element cell 410 may also have the value "1". The determination of quality of the content in an asset may be based on document-type-based declarations of content quantities and dependencies or on natural language parsing to determine context and relevance, or a combination thereof. In another alternative embodiment, a user may also populate these cells with values, in the asset profile, when the document is first created or updated. Various features of embodiments of the present invention, such as metadata, asset attributes, and content elements, can be used with OLAP principles for interactive, iterative and guided search, assessment and comparison of assets and content elements. Different views can not only be built by changing metrics, but also by changing the dimensions of the axes, aggregation level (e.g. drilling up, drilling down, etc.), filtering, accessing source data (e.g. drill through), etc. as will be explained later. Different metrics and principles using analysis or manipulation of metadata to create different views in the context of content matrices, may also be applied to all types of content analysis views.

In Figure 4b, the content matrix lists major content elements 402 and sub-content elements 407. Other embodiments and examples of content matrices may also have expandable content elements to the nth level. In one embodiment all major headings 301 in a document template may be matched with major content elements 402 in a content matrix, sub-headings 302 matched to sub-content elements 407 in a content matrix, etc. As shown in Figure 4b, a major heading 301 in a document template would not necessarily have to be a major content element 402, and vice versa. For example, in Figure 4b, the content elements "Best Practices" and "Partners" are sub-content elements 407. However, their corresponding headings, as shown in Figure 3b and 3c, are represented as major headings 301. Also, a major heading 301 in one asset template may in fact be a sub-content heading in another asset template.

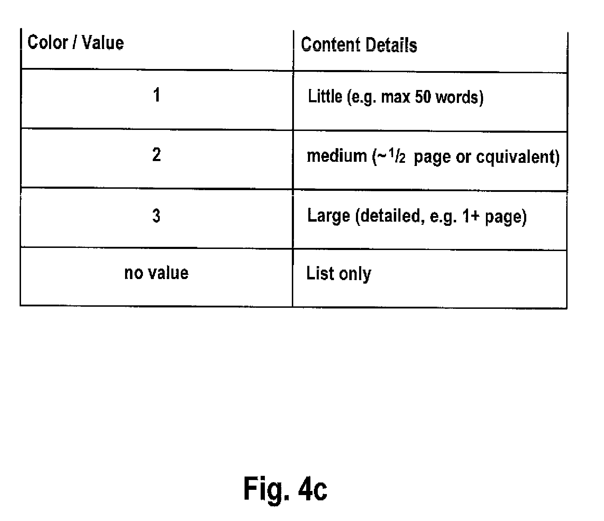

Figure 4c represents an example key that may help a user understand the value and color scheme of a particular view of a content matrix. In the particular example key, the colors and values correspond to the metric of quantity of content. In alternative embodiments, the colors and values in a key may correspond to quality and relevance of particular types of content. In yet other embodiments, the values may correspond to a mixture between quantity and quality. The content matrix view (as are all content analysis views) is adjustable such that various embodiments may display assets and metadata values based on any number of metrics. The advantage of using colors associated with values is that the colors help a reader easily visualize the metadata corresponding to content and allows for easy determination of missing content and the relevance and usefulness of the assets.

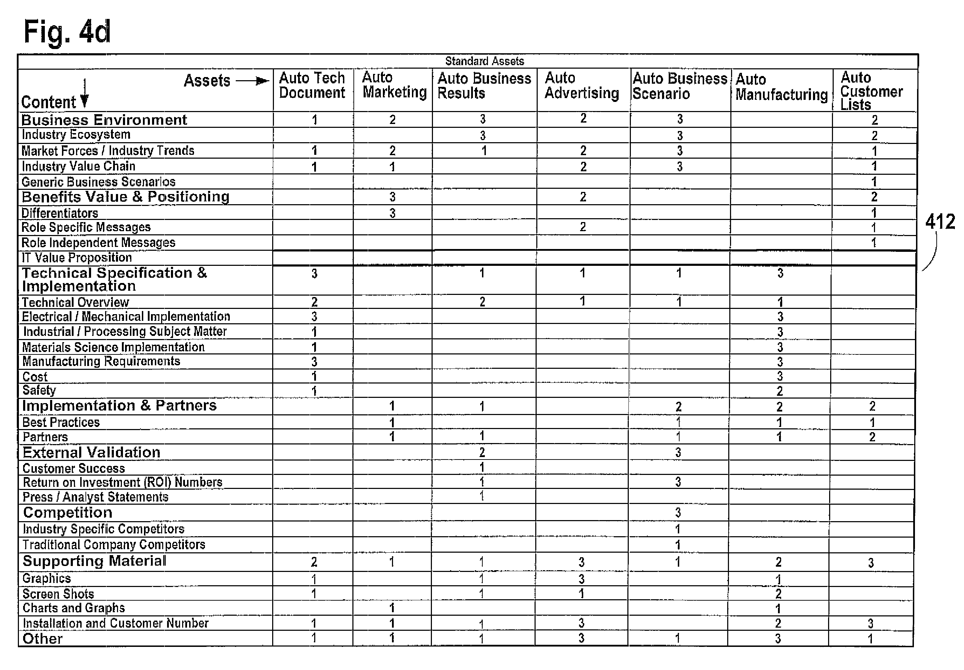

Figure 4d depicts the same content matrix listed in Figure 4b except that the content matrix indicates to the user all the content element values that are missing in all assets 412. For example, a user may be searching for all assets related to an automobile model in order to ensure that all aspects of that automobile model's business aspects are accounted for in making business decisions. The user may then request that the content matrix display all missing information. The content matrix would then display a highlighted bar 412 across all content elements where none of the assets have a value. An advantage of this feature is that a user may then retrieve a document template that contained the missing content elements, or if none existed, be aware to create an asset that contained the missing content elements in order to populate the database with that content. Alternatively, when searching for content, an embodiment of the content analytics system may automatically highlight content elements 412 that have no values.

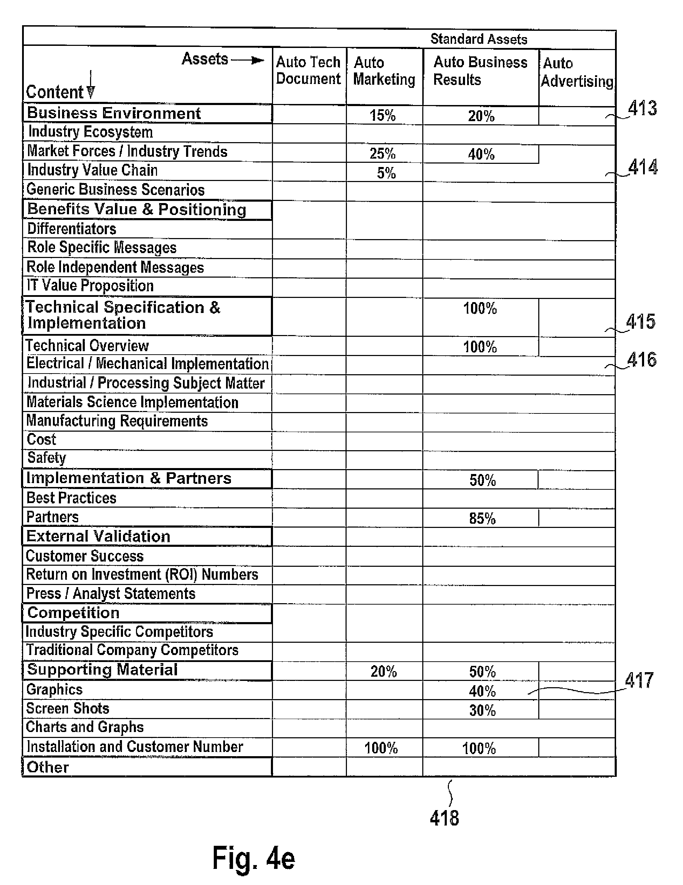

Figure 4e depicts another display type or view for a content matrix (only a portion of the screen is shown for convenience). In this example, a metric for calculating cell values is based on percent of content reuse. Content reuse may be evaluated based on quantity, quality, relevance, date and time of edits, or any other available metric.

Like the view based on the metric of quality and relevance shown in Figure 4b, the major content element cells in Figure 4e need not necessarily be equivalent or additive of its sub-content elements. In one embodiment, the values in a sub-content element may represent the amount of reuse specific to that particular sub-content element. For example, cell 418 indicates that "100%" of its content is reused from other sources; however, the corresponding major heading cell 417 contains the value "20%". This is because while "100%" of the content in the sub-content element "Installation and Customer Numbers" for the "Auto Marketing" document is reused, only "20%" of all content under the major content element "Supporting Material" for the "Auto Marketing" document is reused from other sources. Alternatively, other display types may have content reuse cells represent the total amount of reuse in the particular section. For example, the sum of all content reuse in the major content element cells would be "100%" and the sum of all sub-content elements would add up to "100%."

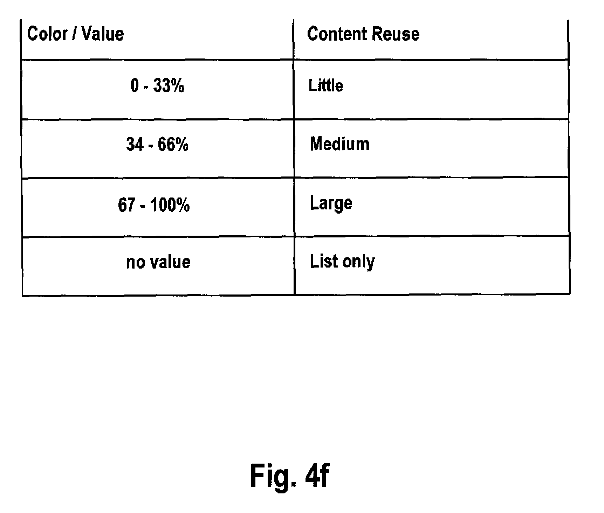

Figure 4f represents a key, similar to the one shown in Figure 4c, except the values and colors correspond to content reuse. Ideally, for each different view of the content matrix, when there is a different metric used to calculate the values, a different key can be provided to the user. Embodiments of a content analytics system may display different views based on different metrics not limited to those explained by figures 4c and 4f. For example, additional metrics may be content age (e.g. days, based on date checked in), remaining content life (days before content will be retired), content relevance for specific target user groups (in %, can be derived from standard template), usage (absolute or relative figures based on download statistics, e.g. >100 downloads/week), etc. More metrics may be derived depending on additional attributes used to evaluate assets or the different views required for a given problem.

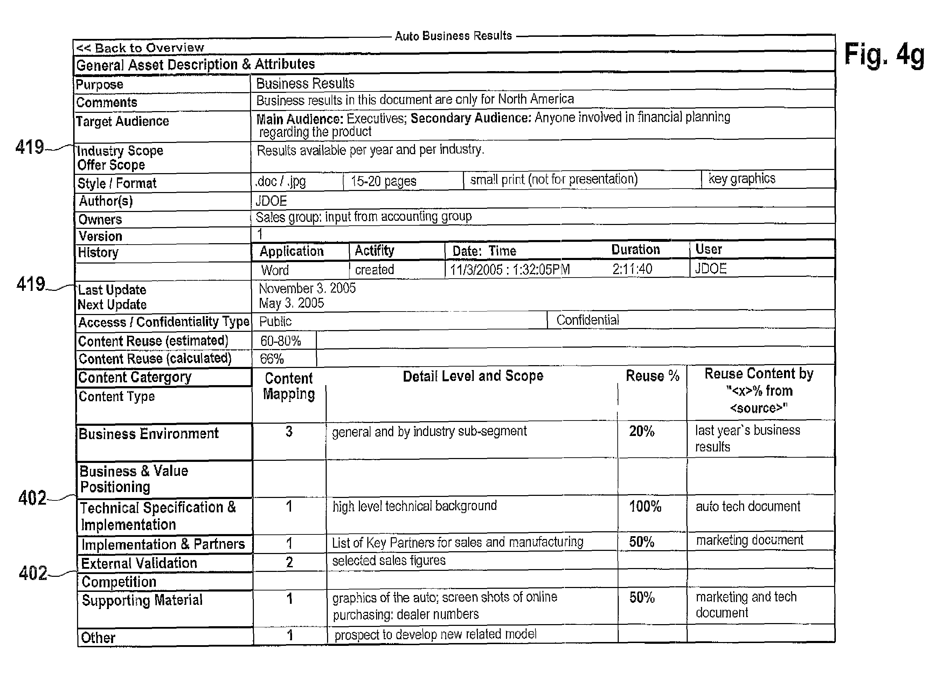

Figure 4g represents an example asset profile, in this case a document profile. The document profile has various attribute elements 419 that provide additional information about the document. Furthermore, the content elements 402 and corresponding information is reflected on the bottom half of the profile. In this case, values are listed for each content element, as was listed in the content matrix, and in addition detailed information regarding each content element is also provided. The major content elements 402 may also be expanded down (although this is not shown in the Figure). Furthermore, percentage of reuse is shown, and the particular source or parent assets that content is reused from is also provided. Alternative asset profiles may also list information regarding different views of the content matrix based on different metrics of evaluating assets.

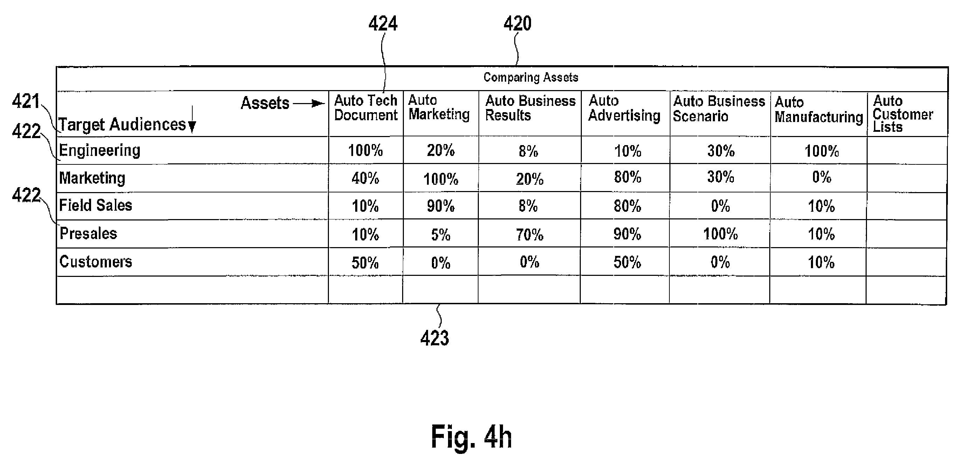

Figure 4h displays an additional example view that is not changed due to a different metric, but rather another OLAP principle, in this case changing dimensions. In the figure, the title 420 indicates to the user that the view is that of "Comparing Assets." The Menu Header on the vertical axis 421 indicates that the target elements 422 are listed. The individual cells 423 would indicate the relevance of a particular asset 424 to a particular target audience 422. For example, only "50%" of the content of the "Auto Tech Document" is relevant to the target audience of "customers." In this figure, the same key and shading scheme is used as in the previous examples. Further OLAP principles may be applied with the content analytics system. For example, when doing a drill up or drill down, a user can change the level of aggregation that is displayed from high level to a lower level. The highest level of aggregation could be used to visualize a Chief Operating Officer's view of content that comes from different Lines of Business (Engineering, Marketing, Sales, etc.) by aggregating all content values into "Master" document types and comparing these against each other. On the next lower level, this master asset type would be broken down into the actual asset types. In the example provided, it could answer questions such as "What asset types do we have to describe our various cars and how are these related?" or "How can I optimize those dependencies and define a better asset set?". The next lower level asset instance view would be relevant for an employee who works in a specific segment who needs to know exactly which documents exist in that segment (e.g. "what assets do we really have at the moment for a particular series?"). Other OLAP principles would be utilizable with a content analytics system.

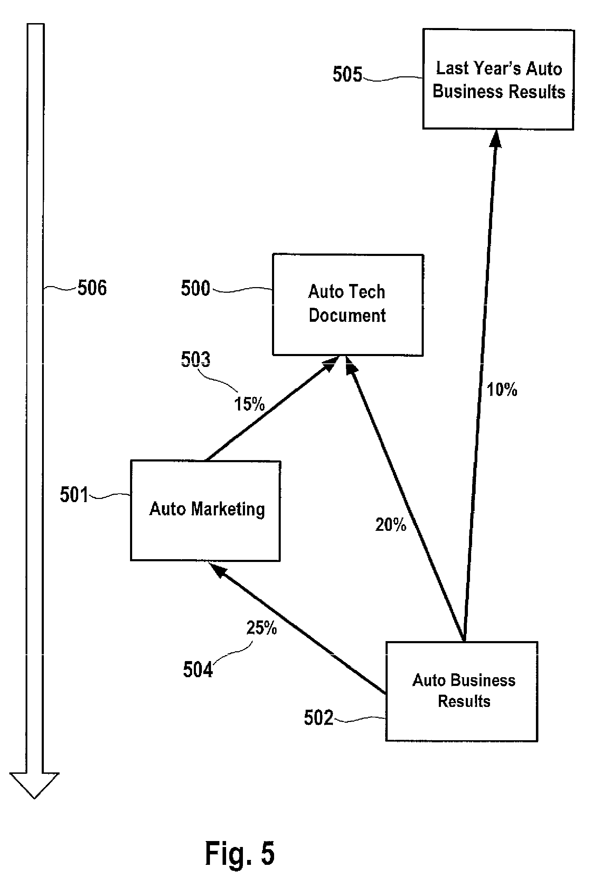

Figure 5 depicts another example of content analysis view, in this case, a graphical display of the relations between assets as well as amount of content reuse among various assets. The example provided in Figure 5 is derived from metadata similar to the example asset profile provided in Figure 4g. An arrow 506 indicates the direction of time of creation, e.g. assets created earlier are at the top and newer assets are at the bottom of the display. The "Auto Business Results" asset 502 reused content from "Last Year's Auto Business Results" asset 505, the "Auto Tech Document" asset 500, and the "Auto Marketing" asset 501. The "Auto Marketing" asset 501 also reused some content from the "Auto Tech Document" asset 500. In addition to indicating relations between the assets, further information can be provided in the graphical display. For example, percentages on the relations indicate the percent of content reuse 503 and 504. Different embodiments may use different interpretations of content reuse. For example, the percentage on the relation 504 may mean that 25% of the "Auto Business Results" asset 502 is taken from the "Auto Marketing" asset 501. Alternatively, a user may want to view the amount of content taken from the "Auto Marketing" asset 501, meaning that while the percentage on the relation 504 indicates that "25%" of the "Auto Marketing" asset 501 is reused in the "Auto Business Results" asset 502, on a whole the content may only represent "5%" of the entire quantity of content in the "Auto Business Results" asset 502. Alternative embodiments may use other metrics to indicate the relations between the various documents in content analysis views. In fact, because embodiments of the present invention contain valuable data about the various assets and dependencies, any combination of existing visualization methods that displays measures versus dimensions to allow easy comparison may be utilized. For example, identification of focus areas and dependencies (e.g. bar graphs, pie charts, harvey balls, spider nets, color coding, 3D graphics, etc.) could be applied to the information of the content analytics system.

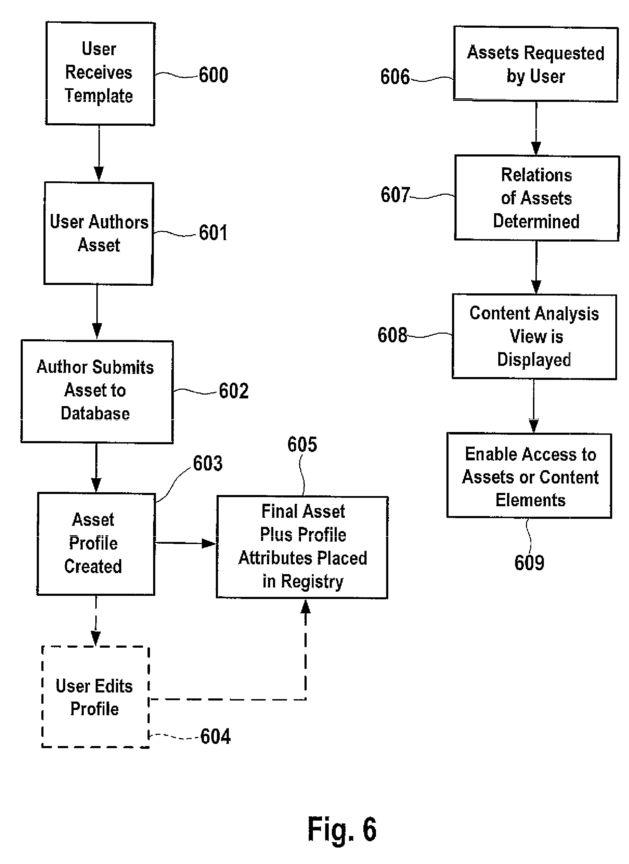

Figure 6 depicts the logic that would be performed by a content analytic system. The first set of logic, steps 600 to 605, depicts aspects of the Process Definitions 207, Authoring 208, and Management 209 aspects of an embodiment of a content analytics system. The second set of logic, steps 606 to 609, involves Information Retrieval 210.

In populating the database with a plurality of assets, a user first receives an asset or document template 600, or alternatively creates one if the asset type is not recognized by the system, and then populates the asset with content 601. The user then submits the asset to a database server 107 or document storage 202. The asset is then evaluated, using various metrics, to determine values to populate as metadata in a database registry 212. The metadata is also automatically created and used to create an asset profile. The user then has the option of editing the asset profile that was created 604 or simply accepting the asset profile created. The asset's metadata is then placed in the registry 605.

During information retrieval, a user will request assets 606 that fit a general criterion. An embodiment of the content analytics system, using OLAP 204, the metadata 205, and the document/content ontology 211, gathers the appropriate data and determines relations between the documents 607 and values needed to populate a content analysis view. The complete list of assets and its corresponding data would be displayed to the user in a content analysis view 608. The content elements in a content analysis view may be represented as different types of views, for example a content matrix, meaning that the values may represent various metrics, for example, quantity of content, quality of content, date of creation of content, etc. The various types of views may in turn be manipulated using different metrics but also by different principles as found in OLAP environments. The user would be able to change the specific type of view between various types of metrics or different views within a type of view. The content analysis view would also enable access to assets or content elements 609, for example in a drill through.

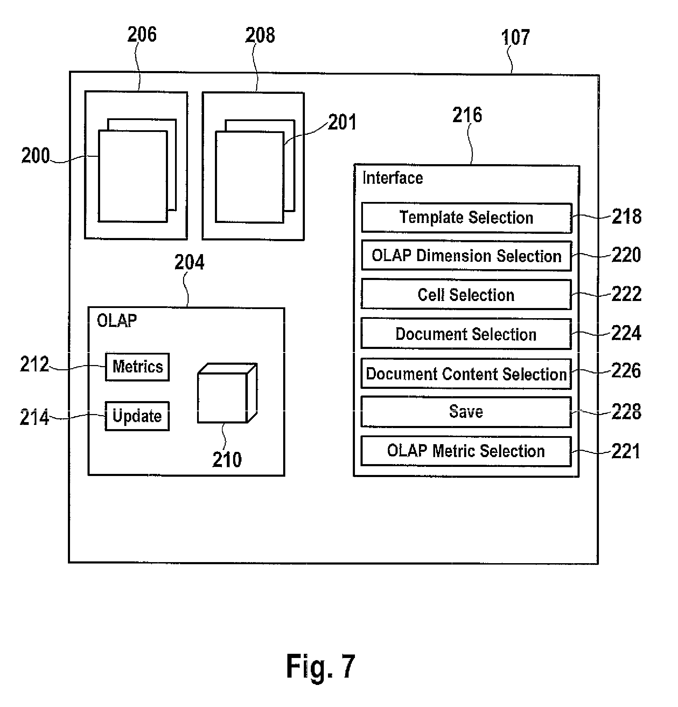

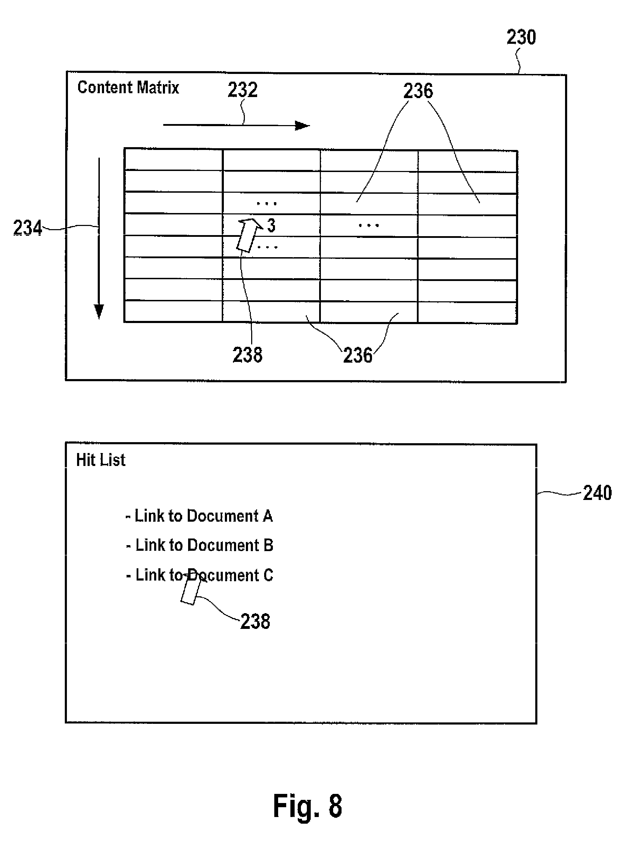

Fig. 7 shows a more detailed embodiment of the server computer 107 of fig. 1. The server computer 107 has storage 206 for storing the document templates 200 and storage 208 for storing the document instances 201 (cf. the embodiment shown in fig. 2). A document instance 201 is also referred to herein as a "document". The server computer 107 has an OLAP component 204 analogous to the embodiment of fig. 2. The OLAP component 204 comprises an OLAP cube 210 and predefined metrics 212 for calculating the data values of the OLAP cube 210. Further, the OLAP component 204 comprises an update component 214 for updating the OLAP cube 210 when a new document instance 201 is stored in the storage 208.
The server computer 107 provides a user interface 216 for each user (cf. users 100 and 102 as shown in fig. 1). The user interface 216 comprises a template selection component 218. The template selection component 218 enables a user to select one of the document templates 200 from the storage 206 for the creation of a new document instance 201.
The user interface 216 further comprises an OLAP dimension selection component 220 for enabling a user to select dimensions of the OLAP cube 210. In addition the OLAP dimension selection component 220 may enable a user to select other OLAP functionalities, such as a level of aggregation and/or other OLAP functionalities. The OLAP metric selection component 221 serves for a user's selection of one of the metrics 212 to be used to populate the OLAP cube 210 and hence the cells of the content matrix (cf. Fig. 8). In addition to a data value each item of the OLAP cube contains links to the documents that contributed to that data value.
The user interface 216 comprises a cell selection component 222 for enabling a user to select one of the cells of the content matrix that is displayed on the user interface 216 (cf. the various example displays of content matrices as shown in figs. 4a to 4g). The document selection component 224 of the user interface 216 serves for selection of one of the documents that contributed to the data value in a user selected cell of the content matrix. For example, the document selection component 224 can generate a hit list showing all documents that contributed to the data value shown in the user selected cell of the content matrix, such as by displaying the links to documents comprised in the item of the OLAP cube that holds the data value shown in the user selected cell 236.
The user interface 216 has a document content selection component 226 for enabling a user to select content from a document that has previously been selected by means of the document selection component 224. For example, the document selection component 224 has provided a hit list including links to document instances 201 that have contributed to the data value shown in the user selected cell. By clicking on one of the links the respective document instance opens such that the user can select content from that document by means of a document content selection component 226 for reuse in the new document instance that is being authored by the user.
For example, the document content selection component 226 can be implemented as a copy and paste functionality such that the user can conveniently copy a selected document from the selected document instance into the new document that is being created. The reuse of content copied from existing document instances can be tracked automatically for creation of respective meta data for the new document instance being created by the user. This meta data may be evaluated by the metric 212 after the document has been completed.
The user interface 216 has a save component 228. After completion of the new document a user clicks on a save button of the save component 228. This invokes execution of the update component 214 for updating the OLAP cube 210 on the basis of the newly created document.
Fig. 8 schematically shows an embodiment of the display generated on a client's computer (cf. access terminals 103 and 104 of fig. 1) by means of the user interface 216 as shown in the embodiment of fig. 7. The display comprises a window 230 containing the content matrix with the user selected dimensions 232, 234 of the OLAP cube 210. For example the window 230 may show a content matrix similar to the examples depicted in figs. 4a, 4b, 4d, 4e or 4h. The content matrix has a number of cells containing aggregated data values from the OLAP cube 210. The user may move a cursor 238 to one of the cells 236 for selecting the cell.
In the example considered here the user clicks on one of the cells 236 displaying a data value of '3'. In response to clicking onto that cell 236 another window 240 opens. The window 240 shows a list of documents that contributed to the data value of "3" shown in the selected cell 236. Each document may be identified by means of a link, such as uniform resource locator (URL). By clicking onto one of these links, such as on the link to document C as shown in fig. 8, this document C is accessed and opened automatically such that the user can select and copy content from that document into the new document being created by the user.

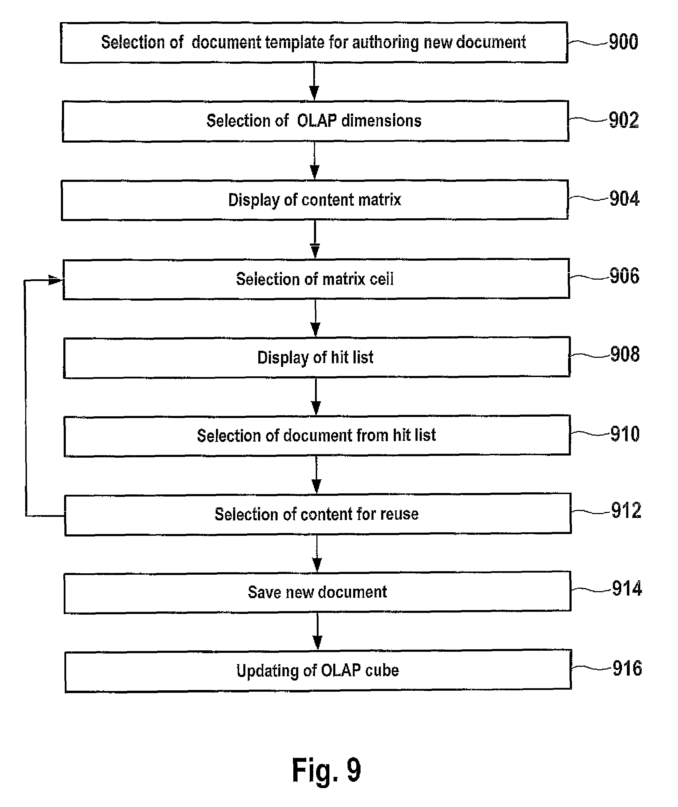

Fig. 9 shows a respective flowchart. In step 900 the user selects one of the document templates 200 for authoring a new document. In step 902 the user selects two dimensions of the OLAP cube 210. In response, a respective content matrix is displayed via the user interface 216 in step 904. In step 906 the user selects one of the cells of a content matrix for access to documents that may contain relevant content. In response to the user's selection of one of the cells of the content matrix, the hit list is displayed in step 908 (cf. window 240 of fig. 8). For this purpose the OLAP cube 210 contains respective link information for each data value. This link information is made accessible to a user through the content matrix shown via the user interface 216.
In step 910 the user selects one of the documents from the hit list and opens that document such as by clicking on the respective link shown on the hit list. If the user considers the document useful he or she may select some of the content for reuse in the new document authored by the user. For example, the user may select text portions for performing a copy and paste operation. Such an operation may be tracked automatically for creation of respective meta data assigned to the new document. If the user does not consider the content of the document to be of interest, he or she may close the documents and open another document on the hit list.
The user may go back to step 906 for selection of another cell of the content matrix in order to obtain access to the respective documents in the following steps 908, 910 and 912. The steps 906 to 912 can be carried out repetitively with respect to different cells until the authoring of the new document has been completed.
In step 914 the newly created document is saved by the user; the save operation initiates updating of the OLAP cube in step 916 with the new document.

### List of Reference Numerals

| | |
|---|---|
| 100 | User |
| 102 | User |
| 103 | Access terminal |
| 104 | Access terminal |
| 105 | Communication medium |
| 106 | Communication medium |
| 107 | Server computer |
| 200 | Document template |
| 201 | Document instance |
| 204 | OLAP component |
| 206 | Storage |
| 208 | Storage |
| 210 | OLAP cube |
| 212 | Metrics |
| 214 | Update component |
| 216 | User interface |
| 218 | Template selection component |
| 220 | OLAP dimension selection component |
| 221 | OLAP Metric selection component |
| 222 | Cell selection component |
| 224 | Document selection component |
| 226 | Document content selection component |
| 228 | Save component |
| 230 | Window |
| 232 | Dimension |
| 224 | Dimension |
| 236 | Cell |
| 238 | Cursor |
| 240 | Window |

## Claims

1. A data processing system comprising
- a set of document templates (200), each document template having a set of headings (301, 302), each heading being assigned to a dimension of an OLAP cube (210),
- a set of instances (201) of the document templates,
- an OLAP component (204) for applying a predefined metric to the instances of the documents and for storing the resulting data values in the OLAP cube,
- a user interface (216) for a user's selection of dimensions of the OLAP cube and for generating a content matrix (230) showing the aggregated data values for the selected dimensions, the user interface being operable for a user's selection of a cell (236) of the content matrix in order to select one of the documents that have contributed to the aggregated data value shown in the selected cell in order to enable a user to reuse content of the selected document for authoring an additional document.

2. The data processing system of claim 1, the user interface being operable for a user's selection of one of the document templates for creation of the additional document, and the OLAP component being operable to update the OLAP cube with the new document in response to a save command entered by a user for saving the new document.

3. The data processing system of claim 1 or 2, further comprising means for coupling to a group of users in order to enable the mutual reuse of document content created by the users.

4. The data processing system of any one of the preceding claims, each cell of the content matrix comprising links to the documents that have contributed to the aggregated data value shown in that cell, the links being stored in the OLAP cube.

5. The data processing system of claim 4, the user interface being operable to provide the links of a selected cell as a hit list from which the user can select and open the document.

6. The data processing system of any one of the preceding claims, further comprising means for associating a plurality of meta data in a profile for each document and for receiving the meta data along with references to the associated documents storage locations.

7. The data processing system of claim 6, wherein meta data consists of profile values and/or document attribute data.

8. The data processing system of any one of the preceding claims, wherein the aggregated data values have a corresponding color.

9. The data processing system of any one of the preceding claims, wherein the metric is quantity of text under a certain heading.

10. The data processing system of any one of the preceding claims, wherein the metric is based on percent variation from at least one original content source.

11. The data processing system of any one of the preceding claims, wherein the metric is based on the quality of the content.

12. The data processing system of claim 11, further comprising natural language passing means for context determination in order to determine the quality of the content.

13. The data processing system of any one of the preceding claims, wherein the metric as based on date of edit, content , remaining content life, content relevance for target user groups and/or usage.

14. The data processing system of any one of the preceding claims, further comprising means for displaying a graphical view of the relations between the instances of the document regarding the reuse of content.

15. A method comprising,
receiving a plurality of files authored by a plurality of users based on a plurality of file templates;
associating a plurality of metadata in a profile for each document;
inputting the metadata into a database along with a reference to the associated files' storage locations; and
returning a content analysis view to a user corresponding to documents with content that match a requested view.

16. A method according to claim 15, wherein files input into a database have a profile that is automatically created.

17. A method according to claim 15 or 16, wherein metadata consists of profile values.

18. A method according to claim 15, 16, or 17, wherein metadata consists of document attribute data.

19. A method according to any one of claims 15 to 18, wherein content elements in the content analysis view that are empty are automatically detected and a user may be alerted to a potential absence of content.

20. A method according to any one of claims 15 to 19, wherein content elements in the content analysis view can display values based on metadata and calculated through a metric.

21. A method according to any one of claims 15 to 20, wherein a document or content from a individual content element displayed by the content analysis view can be retrieved from the database it is stored in.

22. A method according to claim 21, wherein the profile of the document selected can be displayed to a user.

23. A method according to any one of claims 15 to 22, wherein the content analysis view is created based on a search request by a user.

24. A method according to any one of claims 15 to 23, wherein the content analysis view displays documents and the values from metadata that correspond to content elements.

25. A method according to any one of claims 15 to 24, wherein values have a corresponding color.

26. A method according to any one of claims 15 to 25, wherein the metric is quantity of text in a certain content element.

27. A method according to any one of claims 15 to 26, wherein the metric is based on percent variation from at least one original content source.

28. A method according to any one of claims 15 to 27, wherein the metric is based on a quality of the content.

29. A method according to any one of claims 15 to 28, wherein the quality of the content is determined and input by a user.

30. A method according to any one of claims 15 to 29, wherein the quality of the content is determined from natural language parsing that determines context.

31. A method according to any one of claims 15 to 30, wherein the metric is based on a date of edit, content age, remaining content life, content relevance for target user groups and/or usage.

32. A method according to any one of claims 15 to 31, wherein the content analysis view is displayed as a content matrix.

33. A method according to any one of claims 15 to 32, wherein the content analysis view is displayed as a graphical view of the relations between the files.

34. A method according to any one of claims 15 to 33, wherein the content analysis view changes views according to principles as found in online analytical processing environments.

35. A computer readable medium containing instructions that when executed result in a performance of a method comprising,
receiving a plurality of files authored by a plurality of users based on a plurality of file templates;
associating a plurality of metadata in a profile for each document;
inputting the metadata into a database along with references to the corresponding files' storage locations; and
returning a content analysis view to a user corresponding to documents with content that match a requested view.
